# EUROPÄISCHE PATENTSCHRIFT

(11) **EP 1 743 794 B1**
(45) Veröffentlichungstag und Bekanntmachung des Hinweises auf die Patenterteilung: **09.01.2008**
(21) Anmeldenummer: 06009044.6
(22) Anmeldetag: 02.05.2006
(51) Int. Cl.: B60W 20/00, B60W 10/06, B60W 10/08

(54) **Verfahren zur Steuerung der Antriebsleistungsverteilung in einem Kraftfahrzeug mit Hybridantrieb**
Method for controlling the drive power distribution in a hybrid vehicle
Procédé de commande de la répartition de la puissance motrice dans un véhicule hybride

(30) Priorität: 13.07.2005 DE 102005032670
(43) Veröffentlichungstag der Anmeldung: 17.01.2007
(73) Patentinhaber: IAV GmbH Ingenieurgesellschaft Auto und Verkehr, 10587 Berlin (DE)
(72) Erfinder: Ibenthal, Axel, 38114 Braunschweig (DE); Proske, Thomas, 38542 Leiferde (DE); Schultalbers, Matthias, 38536 Meinersen/OT Ahnsen (DE); Spannhake, Stefan Dr.-Ing., 71665 Vaihingen (DE)
(74) Vertreter: Buss, Fritz Gerd

(56) Entgegenhaltungen:
- EP-A- 0 962 352
- EP-B- 1 082 231
- WO-A-20/06069833
- DE-A- 10 135 978
- US-B1- 6 359 404

## Beschreibung

Die Erfindung betrifft ein Verfahren zur Steuerung der Antriebsleistungsverteilung in einem Kraftfahrzeug mit Hybridantrieb mit den im Oberbegriff des Patentanspruches 1 genannten Merkmalen.

Hybridantriebe, bei denen eine Verbrennungskraftmaschine und wenigstens ein Elektromotor gemeinsam ein Drehmoment in den Antriebsstrang von Antriebsmaschinen einbringen, sind an sich bekannter Stand der Technik. Bei Hybridantrieben, bei denen das Drehmoment der Verbrennungskraftmaschine und des Elektromotors gemeinsam zum Antrieb genutzt werden, tritt das Problem auf, dass bei einer Lastmomentenänderung ein unterschiedliches Ansprechvermögen hinsichtlich der Änderung des Drehmomentes der Verbrennungskraftmaschine und des Elektromotors vorliegt. Aufgrund des Wirkprinzips von Verbrennungskraftmaschinen tritt immer eine Verzögerung bei der Umsetzung von Soll- in Istmomente auf. Diese Verzögerung ist insbesondere auf das Verhalten des Luftmassenstromes im Saugrohr sowie dem Verhalten der Drosselklappe und deren Verstellung zurückzuführen. Durch einen Elektromotor wird eine Veränderung von Soll- in entsprechende Istmomente nahezu unverzögert umgesetzt. Bei der Aufteilung der Drehmomente bei einer Laständerung, muss durch eine Steuereinrichtung, die beim Verbrennungsmotor auftretende Verzögerung berücksichtigt werden, um beispielsweise ein Abwürgen des Verbrennungsmotors durch ein sprungartig erhöhtes Lastmoment des Elektromotors zu vermeiden.

Aus der DE 197 04 153 C2 ist ein Antriebssystem bestehend aus einem Verbrennungsmotor und wenigstens einer elektrischen Maschine mit einer Regelung vorbekannt, bei der die Steuerung bei Aufschaltung einer Last in Leerlauf des Verbrennungsmotors einerseits eine Erhöhung des Drehmomentes des Verbrennungsmotors einleitet und andererseits, bis dieser Verbrennungsmotoreingriff wirksam wird, die elektrische Maschine so steuert, dass sie vorübergehend ein zusätzliches antreibendes Drehmoment aufbringt.

Bei diesem Regelverfahren wird nur bei einem Lastwechsel kurzzeitig der Elektromotor zur Abgabe eines zusätzlichen Drehmomentes an einen gemeinsamen Antriebsstrang genutzt. In der Regel ist der Elektromotor nicht ständig am Antrieb des Fahrzeuges beteiligt.

Aus der DE 103 37 002 A1 ist ein Verfahren zur Steuerung der Antriebsleistungsverteilung in einem Kraftfahrzeug mit Hybridantrieb bekannt, bei dem ein Steuerungsgerät auf der Grundlage von gemessenen und/oder berechneten Werten die Antriebsleistungsverteilung zwischen der Brennkraftmaschine und der Elektromaschine hinsichtlich der Leistungsdynamik und des Energieverbrauchs des Fahrzeuges sowie seines Schadstoffausstoßes und seines Fahrkomforts steuert und regelt. Bei einem signalisierten Antriebsleistungswunsch werden vorhandene Soll-Betriebswerte für den Betrieb der Elektromaschine an den aktuellen Antriebsleistungswunsch angepasste Soll-Betriebswerte geändert, wobei zur Bestimmung der neuen Soll-Betriebswerte für die Elektromaschine deren zukünftige maximalen und minimalen Momente, Leistungen, Wirkungsgrade und Verluste vorausberechnet werden.

Eine Regelung der Aufteilung der Drehmomente bei einer Laständerung unter Berücksichtigung der beim Verbrennungsmotor auftretende Verzögerung erfolgt mit diesem Verfahren nicht.

Die DE 103 33 931 A1 beschreibt ein Verfahren zur Regelung eines elektromechanisch, leistungsverzweigenden Hybridantriebs eines Kraftfahrzeuges mit einem Verbrennungsmotor und zwei Elektromaschinen, die durch ein nachgeschaltetes Getriebe gekoppelt sind. Zur Steuerung werden für den Verbrennungsmotor und die beiden Elektromaschinen jeweils die Soll-Drehzahlen und die Soll-Drehmomente berechnet und die jeweiligen Soll-Drehzahlen mit den Ist-Drehzahlen verglichen, wobei bei einer Drehzahlabweichtung ein oder mehrere zusätzliche Drehmomente berechnet werden, die bei der Drehmomentensteuerung des Verbrennungsmotors und der Elektromotoren berücksichtigt werden. Dabei sind die Drehzahlregler der Elektromaschinen als P- oder PD-Regler und des Verbrennungsmotors als I-,PI- oder PID-Regler ausgeführt. Dadurch wird der Drehzahlregelkreis des Verbrennungsmotors mit einem Integral-Anteil versehen, der Ungenauigkeiten in der Drehmomentensteuerung des Verbrennungsmotors ausgleicht.

Mit diesem Verfahren erfolgt nur ein allgemeiner Ausgleich von Ungenauigkeiten in der Drehmomentensteuerung des Verbrennungsmotors. Durch den Vergleich der Soll- und Istdrehzahlen, als Grundlage für die Regelung, treten auch hierbei Verzögerungen bei einer nachfolgenden Drehmomentensteuerung auf.

EP-B-1 082 231 offenbart ein Verfahren nach dem Oberbegriff des Anspruchs 1 zur Steuerung der Antriebsleistungsverteilung in einem Kraftfahrzeug mit Hybridantrieb, bei dem die Antriebsleistung einer Verbrennungskraftmaschine und wenigstens eines Elektromotors gemeinsam zum Aufbringen eines Sollmoments des Kraftfahrzeugs genutzt wird, und bei dem eine Steuerung vorhanden ist, welche auf Grundlage von vorgegebenen, gemessenen und/oder berechneten Werten die Antriebsleistungsverteilung zwischen der Verbrennungskraftmaschine und des Elektromotors steuert und regelt, bei welchem Verfahren bei einer Veränderung der Antriebsleistung infolge Lastpunktverschiebung und/oder Fahrerwunschmomentänderung die bei der Verbrennungskraftmaschine auftretende Verzögerung der Umsetzung von Soll- in Istmomenten durch eine Steuerungseinrichtung im voraus berechnet wird und die Steuereinrichtung den Elektromotor derart ansteuert und regelt, dass die durch die Verzögerung der Verbrennungskraftmaschine entstehenden Drehmomentendifferenzen durch den Elektromotor ausgeglichen werden.

Der Erfindung liegt die Aufgabe zugrunde, ein Verfahren zur Steuerung der Antriebsleistungsverteilung von Drehmomenten einer Verbrennungskraftmaschine und eines Elektromotors auf einen gemeinsamen Abtriebsstrang eines Kraftfahrzeugs mit Hybridantrieb zu schaffen, bei dem bei einer Lastpunktverschiebung und/oder bei einer Fahrerwunschmomentenänderung nahezu verzögerungsfrei die Umsetzung eines Sollmomentes in ein Istmoment erfolgt.

Diese Aufgabe wird erfindungsgemäß durch die kennzeichnenden Merkmale des Patentanspruches 1 gelöst.

Bei einem Hybridantrieb, bei dem die Drehmomente einer Verbrennungskraftmaschine und eines Elektromotors einem gemeinsamen Antriebsstrang zugeführt werden, wird zur Steuerung der Antriebsleistungsverteilung bei einer Veränderung der Antriebsleistung infolge Lastpunktverschiebung und/oder Fahrerwunschmomentänderung die bei der Verbrennungskraftmaschine auftretende Verzögerung der Umsetzung von Soll- in Istmomente durch eine Steuerungseinrichtung im Voraus berechnet und der Elektromotor durch die Steuereinrichtung derart angesteuert, dass die durch die Verzögerung der Verbrennungskraftmaschine entstehenden Drehmomentendifferenzen durch den Elektromotor ausgeglichen werden. Die Regelung des Ausgleichs der entstehenden Drehmomentendifferenz erfolgt in der Steuereinrichtung anhand von zwei identischen Streckenmodellen, zur Berechnung des Verhaltens eines Luftmassenstromes im Saugrohr unter Berücksichtigung der Drosselklapentellung anhand eines Fahrerwunschmomentes und aufgrund einer angeforderten Lastpunktverschiebung. Mit dem jeweiligen Streckenmodell wird für die Änderung des Fahrerwunschmomentes ein prädiziertes Drehmoment der Verbrennungskraftmaschine und für die Lastpunktverschiebung ein prädizierter Betrag der Drehmomentenänderung der Verbrennungskraftmaschine ermittelt. Das prädizierte Drehmoment und der prädizierte Betrag der Drehmomentenänderung der Verbrennungskraftmaschine dienen als Ausgangsgrößen für die Berechnung des einzustellenden Sollwertes des Elektromotors während der Momentenänderung, unter Berücksichtigung des Ausgleichs, der durch die Verbrennungskraftmaschine entstehenden Drehmomentendifferenzen und unter der Voraussetzung, dass die minimale und maximale Drehmomentengrenze des Elektromotors nicht unter- bzw. überschritten wird.

Der Vorteil des erfindungsgemäßen Verfahrens besteht darin, dass bei einer Veränderung der Antriebsleistung infolge Lastpunktverschiebung und/oder Fahrerwunschmomentenänderung nahezu verzögerungsfrei eine Umsetzung eines neuen Sollmoments in ein entsprechendes Istmoment erfolgt. Die bei einer Verbrennungskraftmaschine auftretenden Verzögerungen bei der Umsetzung von neuen Sollmomenten in die entsprechenden Istmomente werden aufgrund deren Verlaufsvorausberechnung im Steuergerät durch den Elektromotor ausgeglichen. Dabei wird der Elektromotor durch das Steuergerät derart angesteuert, dass bis zum Erreichen des Sollmomentes der Verbrennungskraftmaschine die durch die Verbrennungskraftmaschine verursachte Drehmomentendifferenz ausgeglichen wird. Mit dem erfindungsgemäßen Verfahren kann auch eine kontinuierliche Verschiebung von aufzubringenden Drehmomentleistungen zwischen einer oder mehreren Verbrennungsmaschinen und einer oder mehreren Elektromotoren eines Hybridantriebs durchgeführt werden.

Ein weiterer Vorteil der erfindungsgemäßen Lösung besteht darin, dass durch die Steuerung die Antriebsleistungsverteilung so eingestellt wird, dass einerseits eine optimale Unterstützung durch den Elektromotor und andererseits eine maximale Ausnutzung der Verbrennungskraftmaschine erfolgt. Dadurch kann für den Hybridantrieb auch eine Optimierung hinsichtlich Verbrauchsminimierung, Minimierung des Schadstoffausstoßes und Verbesserung des Fahrkomforts durchgeführt werden.

Die Lösung ermöglicht auch den Elektromotor durch Lastpunktverschiebung zum Aufladen einer Batterie zu nutzen, da die Drehmomentenanforderung des Elektromotors ebenfalls bei der Synchronisation berücksichtigt wird.

Weitere vorteilhafte Ausgestaltungen sind in den Unteransprüchen beschrieben, sie werden in der Beschreibung zusammen mit ihren Wirkungen erläutert.

Anhand von Zeichnungen wird die Erfindung nachfolgend an Ausführungsbeispielen näher beschrieben. In den dazugehörigen Zeichnungen zeigen:
- Fig. 1:: eine schematische Darstellung der erfindungsgemäßen Steuerung der Antriebsleistungsverteilung eines Hybridantriebes,
- Fig. 2:: eine schematische Darstellung der Koordination der Lastpunktverschiebung bei der Steuerung der Antriebsleistungsverteilung,
- Fig. 3:: eine schematische Darstellung der Berechnung des Sollmomentes für einen Elektromotor bei der Steuerung der Antriebsleistungsverteilung,
- Fig. 4:: eine schematische Darstellung des Drehmomentenverlaufs während eines Sprunges des Fahrerwunschmomentes und
- Fig. 5:: eine schematische Darstellung des Drehmomentenverlaufs während einer Lastpunktverschiebung.

Ein an sich bekannter Hybridantrieb für ein Fahrzeug besteht aus einer konventionellen Verbrennungskraftmaschine und wenigstens einem Elektromotor, der wahlweise als Motor oder als Generator betrieben werden kann. Der Hybridantrieb kann auch aus einem oder mehreren Verbrennungskraftmaschinen und einer oder mehreren Elektromotoren gebildet werden. Dabei ist es möglich, dass ein Elektromotor zum Aufbringen von Drehmomenten auf den gemeinsamen Antriebsstrang und der andere Elektromotor als Generator zum Aufladen eines Energiespeichers genutzt wird.
Im motorischen Betrieb, bei Einsatz von nur einer Verbrennungsmaschine und einem Elektromotor, treibt der Elektromotor mit der Verbrennungskraftmaschine gemeinsam einen Antriebsstrang an, wobei die für den Antrieb des Elektromotors benötigte Energie von einem Energiespeicher, beispielsweise einer Batterie, geliefert wird. Im Generatorbetrieb wird der Elektromotor von der Verbrennungskraftmaschine und/oder durch den Schub des Fahrzeuges angetrieben, wobei elektrische Energie erzeugt und dem Energiespeicher zugeführt wird. Die Steuerung der Verbrennungskraftmaschine und des Elektromotors erfolgt über eine Steuereinrichtung, vorzugsweise über ein an sich bekanntes Motorsteuergerät. Es ist aber auch möglich, dass die Verbrennungskraftmaschine als auch der Elektromotor von separaten Steuereinrichtungen gesteuert werden, wobei die Steuerung der beiden Antriebsaggregate miteinander koordiniert werden.

Die Steuerung der Antriebsleistungsverteilung der Verbrennungskraftmaschine und des Elektromotors zum Aufbringen eines gemeinsamen Sollmomentes auf einen Antriebstrang erfolgt durch eine Steuereinrichtung. Bei einer Veränderung der Antriebsleistung infolge Lastpunktverschiebung und/oder Fahrerwunschmomentänderung wird die bei der Verbrennungskraftmaschine auftretende Verzögerung der Umsetzung von Soll- in Istmomente durch die Steuerungseinrichtung im Voraus berechnet. Aufgrund der vorausberechneten Verzögerung der Umsetzung von Soll- in Istmomente und der dabei entstehenden Momentendifferenz wird der nahezu verzögerungsfrei ansprechende Elektromotor von der Steuereinrichtung unter Berücksichtigung der Einhaltung der minimalen und maximalen Drehmomentengrenze des Elektromotors derart angesteuert und geregelt, dass die durch die Verzögerung der Verbrennungskraftmaschine entstehenden Drehmomentendifferenzen durch den Elektromotor ausgeglichen werden.

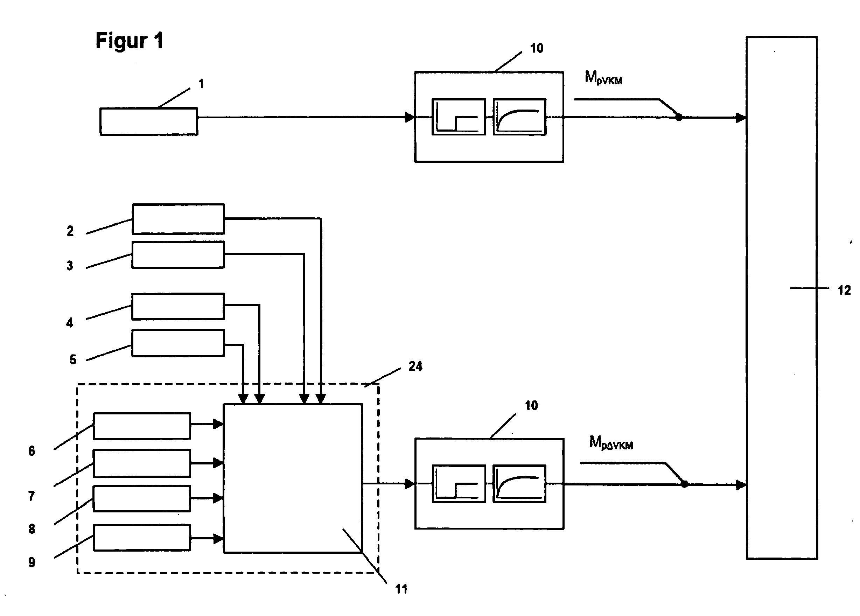

In der Figur 1 ist eine schematische Darstellung der erfindungsgemäßen Steuerung der Antriebsleistungsverteilung eines Hybridantriebes dargestellt. In der Steuereinrichtung wird anhand von zwei identischen Streckenmodellen 10 das Drehmoment der Verbrennungskraftmaschine unter Berücksichtigung des Verhaltens des Luftmassenstromes im Saugrohr bei jeweils unterschiedlichen Eingangsgrößen prädiziert. Einem Streckenmodell 10 wird als Eingangsgröße das Fahrerwunschmoment M_{FW} 1 und dem andern Streckenmodell 10 eine angeforderte Lastpunktverschiebung 24 zugeführt. Durch die später genauer erläuterte Verknüpfung des aus dem Fahrerwunschmoment 1 resultierenden prädizierten Drehmoments der Verbrennungskraftmaschine mit dem aus der Lastverschiebung 24 resultierenden prädizierten Betrags der Drehmomentenänderung der Verbrennungskraftmaschine erfolgt die Drehmomenten-Sollwertberechnung 12 für den Elektromotor aufgrund der verzögerten Umsetzung der Soll- in Istmomente der Verbrennungskraftmaschine.

Bei der Koordination der Momentenanforderung zur Lastpunktverschiebung die im Blockschaltbild 11 der Figur 1 dargestellt ist, werden folgende fahrzeugspezifischen Daten miteinander verknüpft:
- das minimale Drehmoment der Verbrennungskraftmaschine M_{VKM min} 2
- das maximale Drehmoment der Verbrennungskraftmaschine M_{VKM max} 3
- das minimale Drehmoment des Elektromotors M_{EM min} 4
- das maximale Drehmoment des Elektromotors M_{EM max} 5
- die Katalysatorheizinformation Kath 6
- das optimale Drehmoment der Verbrennungskraftmaschine 7
- das optimale Drehmoment des Elektromotors 8 und
- sonstige Momentenanforderungen 9, wie zum Beispiel das Aufladen der Batterie durch den Elektromotor im Generatorbetrieb oder andere die sich aus dem Betrieb des Fahrzeuges ergebenden Momentenanforderungen.

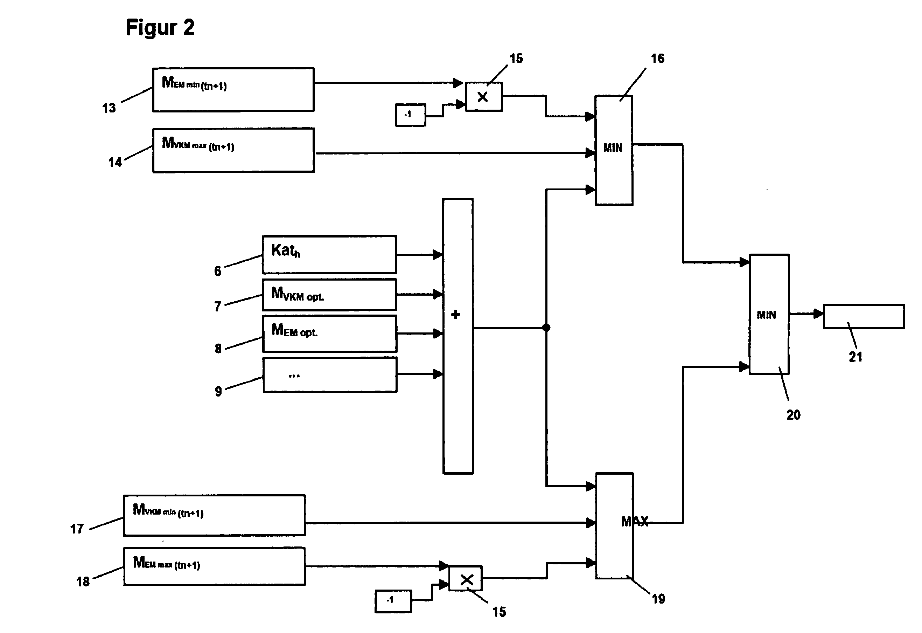

Die Figur 2 zeigt die Struktur des in der Figur 1 dargestellten Blockschaltbildes 24 zur Lastpunktverschiebung. Dabei wird aus dem minimalen Drehmoment des Elektromotors 13 M_{EM min} zum Zeitpunkt tₙ₊₁ und unter Berücksichtigung eines Verknüpfungselements 15, mit dem eine Vorzeichenumkehrung erfolgt, und dem maximalen Drehmoment der Verbrennungskraftmaschine 14 M_{VKM max} zum Zeitpunkt tₙ₊₁ sowie den Momentenwünschen zur Lastpunktverschiebung 6, 7, 8 und 9 im Verknüpfungselement 16 eine minimale aufbringbare Drehmomentendifferenz des Elektromotors bei einer Lastpunktverschiebung ermittelt. Im Verknüpfungselement 19 wird aus dem minimalen Drehmoment der Verbrennungskraftmaschine 17 M_{VKM min} zum Zeitpunkt tₙ₊₁ und aus dem maximalen Drehmoment des Elektromotors 18 M_{EM max} zum Zeitpunkt tₙ₊₁ unter Berücksichtigung des Verknüpfungselements 15, sowie aus den Momentenwünschen zur Lastpunktverschiebung 6, 7, 8 und 9 eine maximale aufbringbare Drehmomentendifferenz des Elektromotors bei einer Lastpunktverschiebung ermittelt. Unter Verknüpfung der in den Verknüpfungselemente 16 und 19 ermittelten Werten im Verknüpfungselement 20 wird die koordinierte Anforderung zur Lastpunktverschiebung 21 in der Steuereinrichtung errechnet. Anhand der koordinierten Anforderung zur Lastpunktverschiebung wird, wie in Figur 1 dargestellt, mittels des Streckenmodells durch Prädiktion der Betrag der Drehmomentenänderung zur Berechnung des Verhaltens der Verbrennungskraftmaschine 23 ermittelt.

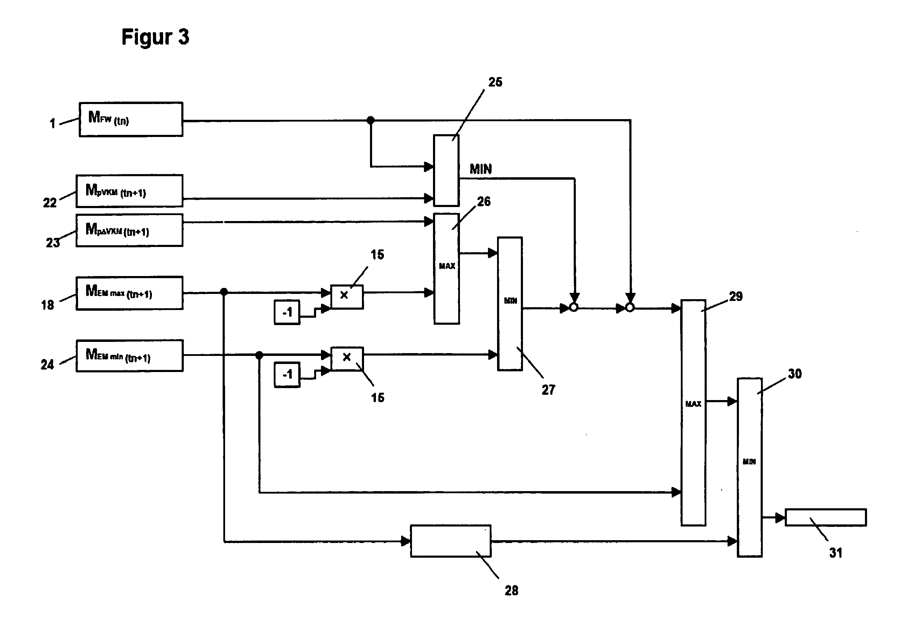

Die in Figur 1 dargestellte Drehmomenten-Sollwertberechnung für den Elektromotor 12, infolge der Lastpunktverschiebung und/oder einer Fahrerwunschmomentenänderung, ist detailliert in Figur 3 dargestellt. In dem Verknüpfungselement 25 erfolgt eine Verknüpfung das Fahrerwunschmoment 1 zum Zeitpunkt tₙ mit der anhand des Streckenmodells prädizierten Drehmoments der Verbrennungskraftmaschine 22 M_{pVKM} zum Zeitpunkt tₙ₊₁. Eine Verknüpfung des vorher beschriebenen prädizierten Betrags der Drehmomentenänderung der Verbrennungskraftmaschine 23 mit dem maximalen Drehmoment der Verbrennungskraftmaschine 18 M_{VKM max} zum Zeitpunkt tₙ₊₁ unter Berücksichtigung des Verknüpfungselements 15 erfolgt im Verknüpfungselement 26. Der so ermittelte Wert wird in dem Verknüpfungselement 27 mit dem minimalen Drehmoment des Elektromotors 13 M_{EM min} zum Zeitpunkt tₙ₊₁ und unter Berücksichtigung eines weiteren Verknüpfungselements 15 verknüpft.

Der Wert aus dem Verknüpfungselement 27 wird unter Berücksichtigung des Fahrerwunschmoments 1 zum Zeitpunkt tₙ und des aus dem Block 25 ermittelten Wertes mit dem minimalen Drehmoment des Elektromotors 13 M_{EM min} zum Zeitpunkt tₙ₊₁ im Verknüpfungselement 29 verknüpft. Durch Verknüpfung dieses Wertes mit dem maximalen Drehmoment der Verbrennungskraftmaschine 18 M_{VKM max} zum Zeitpunkt tₙ₊₁ unter Berücksichtigung der Überprüfung der Reproduzierbarkeit 28 der Realisierung der Drehmomentenänderung im Verknüpfungselement 30 wird das aktuelle Sollmoment des Elektromotors bei einer Umsetzung von Soll- in Istmomente berechnet, mit der auch die durch die Verzögerung der Verbrennungskraftmaschine auftretende Drehmomentendifferenz ausgeglichen wird. Durch die beschriebene Struktur kann eine kontinuierliche Verschiebung von Drehmomenten zwischen der Verbrennungskraftmaschine und dem Elektromotor erfolgen. Diese Drehmomentenverschiebung findet sowohl Anwendung bei einer Umsetzung von Soll- in Istmomente als auch zur Nutzung der speziellen Vorteile eines Hybridantriebes, wie zum Beispiel zur Minimierung des Kraftstoffverbrauchs und der Abgasemission.

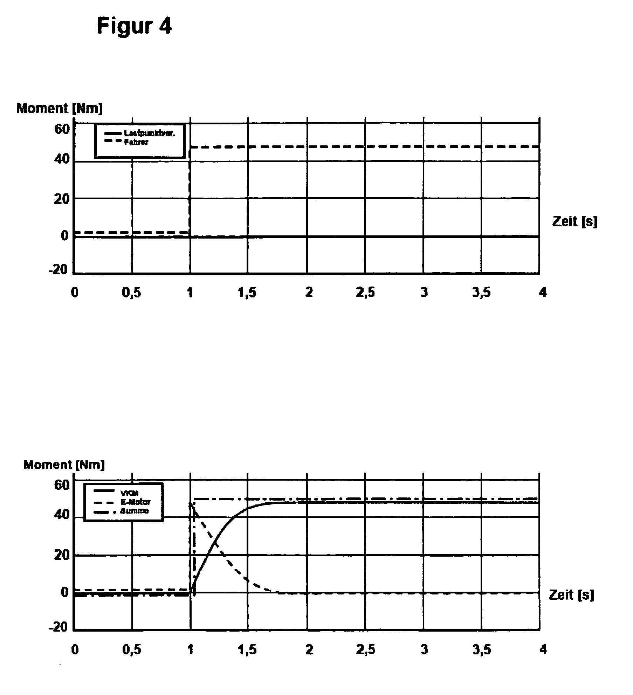

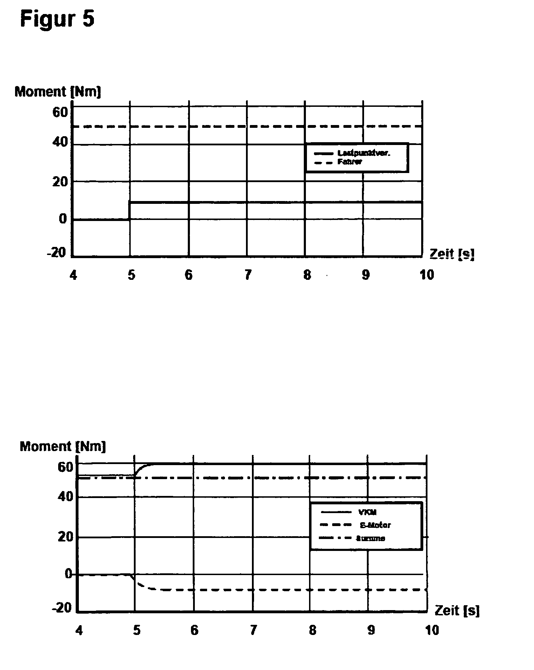

In den Figuren 4 und 5 ist die Verschiebung der Drehmomente zwischen Verbrennungskraftmaschine und Elektromotor bei einer Änderung des Fahrerwunschmomentes und bei einer Lastpunktverschiebung dargestellt. Im oberen Diagramm der Figur 4 ist als gestrichelte Linie eine Änderung des Fahrerwunschmomentes und als Volllinie eine Lastpunktverschiebung abgebildet. Daraus erkennt man, dass über den entsprechend betrachteten Zeitraum keine Lastpunktverschiebung erfolgt, aber zu dem Zeitpunkt t=1 durch den Fahrer ein erhöhtes Drehmoment gefordert wird. Im unteren Diagramm der Figur 4 sind die dazugehörigen Drehmomente bei der Änderung des Fahrerwunschmomentes aufgezeichnet. Das dabei entstehende Drehmoment der Verbrennungskraftmaschine ist als Volllinie, das des Elektromotors als gestrichelte Linie und das sich daraus ergebende Gesamtmoment als Strich-Punkt-Linie dargestellt. Aus der Darstellung kann man erkennen, dass bei der Umsetzung der Soll- in Istmomente das Verhalten der Verbrennungskraftmaschine durch die nahezu verzögerungsfreie Umsetzung der Soll- in Istmomente durch den Elektromotor ausgeglichen wird.

In der Figur 5, die den zeitlichen Verlauf der Drehmomente bei einer Anforderung zur Lastpunktverschiebung zeigt, entspricht die Linienkennzeichnung denen in Figur 4. Aus dem oberen Diagramm ist eine Lastverschiebung zu entnehmen, bei dem die Steuereinrichtung ein zusätzliches Drehmoment von beispielsweise 10 Nm anfordert, damit der Elektromotor in den generatorischen Betrieb übergeht und somit die Batterie laden kann. Da sich der Fahrerwunsch nicht ändert, ist sicherzustellen, dass das Drehmoment am Abtriebsstrang konstant bleibt. Die vorgeschlagene Steuerung berücksichtigt die Verzögerungszeit der Verbrennungsmaschine und ändert das Drehmoment des Elektromotors nicht sprungförmig, sondern entsprechend dem zur Verfügung stehendem Drehmoment der Verbrennungskraftmaschine.

### Aufstellung der verwendeten Bezugszeichen

- 1: Fahrerwunschmoment M_{FW}
- 2: minimales Drehmoment der Verbrennungskraftmaschine M_{VKM min}
- 3: maximales Drehmoment der Verbrennungskraftmaschine M_{VKM max}
- 4: minimales Drehmoment des Elektromotors M_{EM min}
- 5: maximales Drehmoment des Elektromotors M_{EM max}
- 6: Katalysatorheizinformation Kath
- 7: optimales Drehmoment der Verbrennungskraftmaschine
- 8: optimales Drehmoment des Elektromotors
- 9: sonstige Momentenanforderungen
- 10: Streckenmodell zur Vorausberechnung des Verhaltens einer Verbrennungskraftmaschine unter Berücksichtigung des Luftmassenstromes im Saugrohr
- 11: Blockschaltbild zur Koordination der Momentenanforderung zur Lastpunktverschiebung
- 12: Drehmomenten-Sollwertberechnung für den Elektromotor
- 13: minimales Drehmoment des Elektromotors M_{EM min} zum Zeitpunkt tₙ₊₁
- 14: maximales Drehmoment des VerbrennungsmotorsM_{VKM max} zum Zeitpunkt tₙ₊₁
- 15: Verknüpfungselement
- 16: Verknüpfungselement
- 17: minimales Drehmoment der Verbrennungskraftmaschine M_{VKM min} zum Zeitpunkt tₙ₊₁
- 18: maximales Drehmoment des Elektromotors M_{EM max} zum Zeitpunkt tₙ₊₁
- 19: Verknüpfungsetement
- 20: Verknüpfungselement
- 21: koordinierte Anforderung zur Lastpunktverschiebung
- 22: prädiziertes Drehmoment der Verbrennungskraftmaschine M_{pVKM} zum Zeitpunkt tₙ₊₁
- 23: prädizierte Drehmomentänderung der Verbrennungskraftmaschine M_{pΔVKM} zum Zeitpunkt tₙ₊₁
- 24: Blockschaltbild zur Lastpunktverschiebung
- 25: Verknüpfungselement
- 26: Verknüpfungselement
- 27: Verknüpfungselement
- 28: Überprüfung der Reproduzierbarkeit
- 29: Verknüpfungselement
- 30: Verknüpfungselement
- 31: Ermittlung des aktuellen Sollmomentes des Elektromotors

## Patentansprüche

1. Verfahren zur Steuerung der Antriebsleistungsverteilung in einem Kraftfahrzeug mit Hybridantrieb, bei dem die Antriebsleistung einer Verbrennungskraftmaschine und wenigstens eines Elektromotors gemeinsam zum Aufbringen eines Sollmoments des Kraftfahrzeugs genutzt wird, und bei dem eine Steuerung vorhanden ist, welche auf Grundlage von vorgegebenen, gemessenen und/oder berechneten Werten die Antriebsleistungsverteilung zwischen der Verbrennungskraftmaschine und dem Elektromotor steuert und regelt,
**dadurch gekennzeichnet, dass**
in der Steuereinrichtung eine Prädikation des Drehmoments der Verbrennungskraftmaschine bei einer Veränderung der Antriebsleistung infolge Lastpunktverschiebung und/oder Fahrerwunschmomentänderung anhand von zwei identischen Streckenmodellen erfolgt, in denen jeweils das Verhalten des Luftmassenstromes im Saugrohr und die Stellung der Drosselklappe berücksichtigt werden, wobei das prädizierte Drehmoment in dem ersten Streckenmodell anhand eines Fahrerwunschmomentes und in dem zweiten Streckenmodell anhand einer angeforderten Lastpunktverschiebung ermittelt wird und die dabei infolge der auftretenden Verzögerung der Umsetzung von Soll- in Istmomente ermittelten Drehmomentendifferenzen der Verbrennungskraftmaschine die Ausgangsgrößen für die Berechnung des einzustellenden Sollwertes des Elektromotors während der Momentenänderung bilden.

2. Verfahren nach Anspruch 1,
**dadurch gekennzeichnet, dass**
die Höhe der Lastpunktverschiebung in der Steuereinrichtung anhand der Lastanforderungen und unter Berücksichtigung der vorhandenen minimalen und maximalen Drehmomente der Verbrennungskraftmaschine und des Elektromotors ermittelt wird.

3. Verfahren nach Anspruch 1 und 2,
**dadurch gekennzeichnet, dass**
die Ermittlung der koordinierten Anforderung zur Lastpunktverschiebung in der Steuereinrichtung durch Verknüpfung der Lastanforderungen mit dem minimalen Drehmoment des Elektromotors und dem maximalen Drehmoment der Verbrennungskraftmaschine zu einem minimalen Wert und durch Verknüpfung der Lastanforderungen mit dem minimalen Drehmoment der Verbrennungskraftmaschine und dem maximalen Drehmoment des Elektromotors zu einem maximalen Wert sowie durch Verknüpfung des ermittelten minimalen mit dem ermittelten maximalen Wert erfolgt.

4. Verfahren nach Anspruch 1 bis 3,
**dadurch gekennzeichnet, dass**
in der Steuereinrichtung durch Verknüpfung des Fahrerwunschmomentes zum Zeitpunkt tₙ mit dem dazugehörigen vorausberechneten prädizierten Drehmoment der Verbrennungskraftmaschine zum Zeitpunkt tₙ₊₁ unter Berücksichtigung der Einhaltung der minimalen und maximalen Drehmomentengrenzen des Elektromotors zum Zeitpunkt tₙ₊₁ und/oder durch Verknüpfung des prädizierten Betrags der Drehmomentenänderung durch Lastverschiebung zum Zeitpunkt tₙ₊₁ mit den minimalen und maximalen Drehmomentengrenzen des Elektromotors zum Zeitpunkt tₙ₊₁ das zu erbringende aktuelle Sollmoment des Elektromotors ermittelt wird.

5. Verfahren nach Anspruch 1 bis 4,
**gekennzeichnet dadurch, dass**
der Hybridantrieb aus einer oder mehreren Verbrennungskraftmaschinen und einem oder mehreren Elektromotoren gebildet wird.

## Claims

1. Method for controlling the drive power distribution in a motor vehicle with hybrid drive, in which method the drive power of an internal combustion engine and of at least one electric motor is utilized together to impart a nominal torque of the motor vehicle, and in which method a controller is provided which controls and regulates the drive power distribution between the internal combustion engine and the electric motor on the basis of predefined, measured and/or calculated values,
**characterized in that**
in the control device, a prediction of the torque of the internal combustion engine in the event of a variation in the drive power as a result of a load point shift and/or driver torque demand variation takes place on the basis of two identical system models in which in each case the behaviour of the air mass flow rate in the intake pipe and the position of the throttle flap are taken into consideration, with the predicted torque being determined in the first system model on the basis of a driver torque demand and in the second system model on the basis of a demanded load point shift, and the torque differences of the internal combustion engine which are determined here as a result of the occurring delay in the conversion of nominal torques into actual torques forming the starting variables for the calculation of the nominal value of the electric motor which is to be set during the torque variation.

2. Method according to Claim 1,
**characterized in that**
the level of the load point shift is determined in the control device on the basis of the load demands and taking into consideration the present minimum and maximum torques of the internal combustion engine and of the electric motor.

3. Method according to Claim 1 and 2,
**characterized in that**
the determination of the coordinated demand for a load point shift takes place in the control device by combining the load demands with the minimum torque of the electric motor and the maximum torque of the internal combustion engine to form a minimum value, and by combining the load demands with the minimum torque of the internal combustion engine and the maximum torque of the electric motor to form a maximum value, and by combining the determined minimum value with the determined maximum value.

4. Method according to Claim 1 to 3,
**characterized in that**
the present nominal torque of the electric motor which is to be imparted is determined in the control device by combining the driver torque demand at the time tₙ with the associated pre-calculated predicted torque of the internal combustion engine at the time tₙ₊₁ taking into consideration the adherence to the minimum and maximum torque limits of the electric motor at the time tₙ₊₁ and/or by combining the predicted magnitude of the torque variation as a result of load shift at the time tₙ₊₁ with the minimum and maximum torque limits of the electric motor at time tₙ₊₁.

5. Method according to Claim 1 to 4,
**characterized in that**
the hybrid drive is formed from one or more internal combustion engines and one or more electric motors.

## Revendications

1. Procédé de commande de la distribution de la puissance motrice dans un véhicule automobile à propulsion hybride, avec lequel la puissance motrice d'un moteur à combustion interne et d'au moins un moteur électrique sont utilisées en commun pour appliquer un couple de consigne du véhicule automobile, et avec lequel il existe une commande qui, en se basant sur des valeurs prédéfinies, mesurées et/ou calculées, commande et régule la distribution de la puissance motrice entre le moteur à combustion interne et le moteur électrique,
**caractérisé en ce que**
une prévision du couple du moteur à combustion interne en cas de modification de la puissance motrice suite à un décalage du point de charge et/ou d'un changement du couple voulu par le conducteur est effectuée dans le dispositif de commande au moyen de deux modèles de trajet identiques dans lesquels sont respectivement pris en compte le comportement du débit massique d'air dans le conduit d'aspiration et la position du clapet d'étranglement, le couple prévu étant déterminé dans le premier modèle de trajet au moyen d'un couple voulu par le conducteur et dans le deuxième modèle de trajet au moyen d'un décalage demandé du point de charge et les différences de couple du moteur à combustion interne déterminée ici du fait du retard de conversion du couple de consigne en couple réel qui survient formant les grandeurs de sortie pour le calcul de la valeur de consigne à régler du moteur électrique pendant le changement du couple.

2. Procédé selon la revendication 1,
**caractérisé en ce que**
le niveau de décalage du point de charge dans le dispositif de commande est déterminé au moyen des demandes de charge et en tenant compte des couples minimum et maximum présents du moteur à combustion interne et du moteur électrique.

3. Procédé selon les revendications 1 et 2,
**caractérisé en ce que**
la détermination de la demande coordonnée en vue du décalage du point de charge dans le dispositif de commande s'effectue en combinant les demandes de charge avec le couple minimum du moteur électrique et le couple maximum du moteur à combustion interne en une valeur minimale et en combinant les demandes de charge avec le couple minimum du moteur à combustion interne et le couple maximum du moteur électrique en une valeur maximale ainsi qu'en combinant la valeur minimale déterminée avec la valeur maximale déterminée.

4. Procédé selon les revendications 1 à 3,
**caractérisé en ce que**
le couple de consigne à appliquer actuellement par le moteur électrique est déterminé dans le dispositif de commande en combinant le couple voulu par le conducteur à l'instant tₙ avec le couple prévu correspondant préalablement calculé du moteur à combustion interne à l'instant tₙ₊₁ en tenant compte du respect des limites de couple minimale et maximale du moteur électrique à l'instant tₙ₊₁ et/ou en combinant le taux prévu de modification du couple résultant du décalage de charge à l'instant tₙ₊₁ avec les limites de couple minimale et maximale du moteur électrique à l'instant tₙ₊₁.

5. Procédé selon les revendications 1 à 4,
**caractérisé en ce que**
la propulsion hybride est formée par un ou plusieurs moteurs à combustion interne et un ou plusieurs moteurs électriques.
